# EUROPEAN PATENT APPLICATION

(11) **EP 4 682 470 A1**
(43) Date of publication of application: **21.01.2026**
(21) Application number: 23927515.9
(22) Date of filing: 16.03.2023
(51) Int. Cl.: G01C 21/26, G08G 1/00

(54) **INFORMATION PROCESSING DEVICE, INFORMATION PROCESSING METHOD, AND INFORMATION PROCESSING PROGRAM**

(71) Applicant: Pioneer Corporation, Tokyo 113-0021 (JP)
(72) Inventor: MATSUMOTO, Reiji, Kawagoe-shi, Saitama 350-8555 (JP); NAKAMOTO, Shogo, Tokyo 113-0021 (JP); OGAWA, Keisuke, Tokyo 113-0021 (JP); HIJIKATA, Makoto, Tokyo 113-0021 (JP); FUKUSHIMA, Norihiko, Kawagoe-shi, Saitama 350-8555 (JP)
(74) Representative: Hoffmann Eitle
(86) International application number: PCT/JP2023/010312
(87) International publication number: WO 2024/189896

(57) **Abstract**

An information processing device (100) includes: an acquisition unit (121) that acquires information on a traveling track from a plurality of terminals; and a determination unit (124) that determines that some of the plurality of terminals have moved in the same moving object based on the correspondence between information on a stop time point and a stop place included in information on a traveling track acquired by the acquisition unit (121) and information on a stop time point and a stop place included in information on another traveling track.

## Description

### Field

The present invention relates to an information processing device, an information processing method, and an information processing program.

### Background

There has been a technique of determining whether a mobile terminal is in a vehicle by determining whether or not a moving speed of the mobile terminal is equal to or less than a predetermined value and whether or not the mobile terminal is within a predetermined range of the vehicle from position information received from the mobile terminal at different time points (e.g., Patent Literature 1).

### Citation List

### Patent Literature

Patent Literature 1: JP 2010-169570 A

### Non Patent Literature

Non Patent Literature 1: Indexing of vehicle track under network constraint by using character string index (http://db-event.jpn.org/deim2016/papers/39.pdf)

### Summary

### Technical Problem

Unfortunately, in conventional techniques, whether a terminal has been in the same moving object cannot be easily determined. For example, in the conventional techniques, information on all terminals is required to be constantly grasped in order to determine whether a terminal is in a vehicle, which leads to enormous processing loads. Moreover, for example, problems of processing capacity and cost arise accordingly. As described above, examples of a problem to be solved by the present invention include the above-described problems. Solution to Problem

An information processing device according to claim 1 includes an acquisition unit that acquires information on a traveling track from a plurality of terminals, and a determination unit that determines that some of the plurality of terminals have moved in a same moving object based on correspondence between information on a stop time point and a stop place included in information on a traveling track acquired by the acquisition unit and information on a stop time point and a stop place included in information on another traveling track.

An information processing method according to claim 8 is executed by computer, the information processing method includes an acquisition process of acquiring information on a traveling track from a plurality of terminals, and a determination process of determining that some of the plurality of terminals have moved in a same moving object based on correspondence between information on a stop time point and a stop place included in information on a traveling track acquired in the acquisition process and information on a stop time point and a stop place included in information on another traveling track.

An information processing program according to claim 9 is executed by computer to execute a process, the process includes an acquisition step of acquiring information on a traveling track from a plurality of terminals, and a determination step of determining that some of the plurality of terminals have moved in a same moving object based on correspondence between information on a stop time point and a stop place included in information on a traveling track acquired in the acquisition step and information on a stop time point and a stop place included in information on another traveling track.

### Brief Description of Drawings

FIG. 1 illustrates a configuration of an information processing device system according to an embodiment.
FIG. 2 illustrates a configuration of an information processing device according to the embodiment.
FIG. 3 outlines processing performed by the information processing device according to the embodiment.
FIG. 4 outlines the processing performed by the information processing device according to the embodiment.
FIG. 5 is a flowchart illustrating an example of the processing performed by the information processing device according to the embodiment.
FIG. 6 is a hardware configuration diagram illustrating an example of a computer that implements the functions of the information processing device. Description of Embodiments

An embodiment for carrying out the present invention (hereinafter, embodiment) will be described below with reference to the drawings. Note that the present invention is not limited by the embodiment to be described below. Moreover, in the description of the drawings, the same portions are denoted by the same reference signs.

### [1. Configuration of Information Processing System]

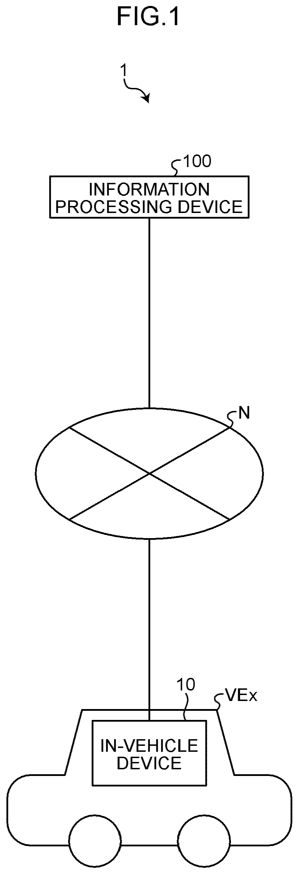

First, a configuration of an information processing system according to the embodiment will be described with reference to FIG. 1. FIG. 1 illustrates the configuration of the information processing system according to the embodiment. FIG. 1 illustrates an information processing system 1 as an example of the information processing system according to the embodiment.

As illustrated in FIG. 1, the information processing system 1 may include an in-vehicle device 10 and an information processing device 100. Furthermore, the in-vehicle device 10 and the information processing device 100 are communicably connected with each other by wire or wirelessly via a network N. Furthermore, the information processing system 1 in FIG. 1 may include any number of in-vehicle devices 10 and any number of information processing devices 100.

The in-vehicle device 10 may be a dedicated sensor device built in or externally attached to a vehicle VEx, or may be a device such as a recording device (dashboard camera) installed in the vehicle VEx for preventing crimes and addressing tailgating.

Furthermore, the in-vehicle device 10 may include a sensor device and a notification device. In an example, the in-vehicle device 10 may be a combined device including a sensor device and a notification device, which are independent and communicably connected with each other. Furthermore, in another example, the in-vehicle device 10 may be one device having a sensor function and a notification function.

Furthermore, a user can substitute a mobile terminal device (e.g., smartphone, tablet terminal, laptop, desktop PC, and PDA) which the user daily uses for the in-vehicle device 10 by connecting a predetermined sensor to the mobile terminal device and introducing a predetermined application. For example, a mobile terminal device including a predetermined sensor or to which a predetermined sensor is connected can be understood as the in-vehicle device 10 here. When the mobile terminal device is used as the in-vehicle device 10, for example, the mobile terminal device is installed in, for example, a dashboard of the vehicle VEx at the time of driving.

Furthermore, the in-vehicle device 10 may include various sensors. For example, the in-vehicle device 10 may include various sensors such as a global navigation satellite system (GNSS) sensor, a global positioning system (GPS), an acceleration sensor, a gyro sensor, a camera, and an atmospheric pressure sensor.

The information processing device 100 may acquire various types of data based on sensor information detected by these sensors (e.g., by analyzing sensor information). For example, the information processing device 100 acquires position information from a GNSS sensor. Furthermore, for example, the information processing device 100 acquires angular speed from a gyro sensor. Furthermore, for example, the information processing device 100 acquires data of a moving image obtained by imaging the outside from the inside of the vehicle VEx with a camera. Note that the information processing device 100 may acquire sensor information detected by not only a sensor installed in the in-vehicle device 10 but a sensor provided in the vehicle VEx itself.

The information processing device 100 determines whether terminals have moved in the same moving object. For example, the information processing device 100 determines that some of a plurality of terminals have moved in the same moving object based on the correspondence between information on a stop time point and a stop place included in information on a certain traveling track and information on a stop time point and a stop place included in information on another traveling track.

Here, when the in-vehicle device 10 is an edge computer that performs edge processing near the user, the information processing device 100 may be, for example, a cloud computer that performs processing on a cloud side. That is, the information processing device 100 may be a server device.

Furthermore, in the following embodiment, an example is illustrated in which information is transmitted and received between the in-vehicle device 10 and the information processing device 100, so that information processing according to the embodiment is performed in the information processing system 1. The information processing according to the embodiment, however, may be performed only on an edge side, that is, the in-vehicle device 10. In this case, the in-vehicle device 10 may be configured to behave like the information processing device 100 by an information processing program according to the embodiment, for example.

### [2. Configuration of Information Processing Device]

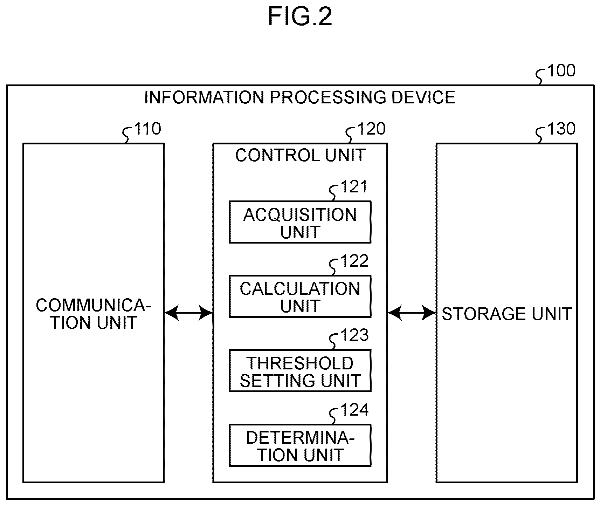

Next, the information processing device 100 according to the embodiment will be described with reference to FIG. 2. FIG. 2 illustrates a configuration example of the information processing device 100 according to the embodiment. As illustrated in FIG. 2, the information processing device 100 includes a communication unit 110, a storage unit 130, and a control unit 120. Each unit of the information processing device 100 will be described below.

The communication unit 110 is implemented by, for example, a network interface card (NIC). The communication unit 110 is connected to the network N by wire or wirelessly, and transmits and receives information to and from the in-vehicle device 10, for example.

The storage unit 130 is implemented by, for example, a semiconductor memory element such as a random access memory (RAM) and a flash memory, or a storage device such as a hard disk and an optical disk. The storage unit 130 stores information such as information on a traveling track, a threshold, and other information necessary for determination.

Here, the information on a traveling track includes information on a terminal used for recording the traveling track and information on a traveling ID, a stop number, a stop time point, a stop place, the number of times of stops, a stop time period, and a traveling distance. Furthermore, information extracted as a stop time point may be set as an elapsed time from the previous stop place. Note that the information stored by the storage unit 130 is not limited to the above-described example.

The control unit 120 is implemented by using a central processing unit (CPU), a network processor (NP), a field programmable gate array (FPGA), or the like, and executes a processing program stored in a memory. As illustrated in FIG. 2, the control unit 120 includes an acquisition unit 121, a calculation unit 122, a threshold setting unit 123, and a determination unit 124. Each unit of the control unit 120 will be described below.

The acquisition unit 121 acquires information on a traveling track from a plurality of terminals. For example, the acquisition unit 121 acquires information on a stop time point and a stop place from the plurality of terminals. Furthermore, for example, the acquisition unit 121 acquires, from the plurality of terminals, terminal information and information on a traveling ID, a stop number, a stop time point, a stop place, the number of times of stops, a stop time period, and a traveling distance.

The acquisition unit 121 acquires, as a stop time period, an elapsed time from a stop in the information on a traveling track. For example, the acquisition unit 121 acquires information on a stop time point (elapsed time from stop) and a stop place.

Note that the information on a traveling track acquired by the acquisition unit 121 may have been recorded by a predetermined terminal for any period for a purpose.

The calculation unit 122 calculates the number of times information on a stop time point and a stop place included in the information on a traveling track acquired by the acquisition unit 121 corresponds to information on a stop time point and a stop place included in information on another traveling track. For example, the calculation unit 122 calculates the number of times information on a stop time point and a stop place included in the information on a traveling track acquired by the acquisition unit 121 matches the information on a stop time point and a stop place included in the information on the other traveling track. Details of processing performed by the calculation unit 122 will be described in [3. Outline of Processing].

The threshold setting unit 123 sets a threshold for the number of times calculated by the calculation unit 122 based on the information on a traveling track acquired by the acquisition unit 121. For example, the threshold setting unit 123 sets a threshold in accordance with the length of a traveling distance in the information on a traveling track acquired by the acquisition unit 121. Details of processing performed by the threshold setting unit 123 will be described in [3. Outline of Processing].

Furthermore, for example, the threshold setting unit 123 sets a threshold in accordance with the length of a stop time period in the information on a traveling track acquired by the acquisition unit 121.

Furthermore, for example, the threshold setting unit 123 sets a threshold in accordance with the number of times of stops in the information on a traveling track acquired by the acquisition unit 121.

The determination unit 124 determines that some of a plurality of terminals have moved in the same moving object based on the correspondence between information on a stop time point and a stop place included in the information on a traveling track acquired by the acquisition unit 121 and the information on a stop time point and a stop place included in the information on the other traveling track.

For example, when the number of times calculated by the calculation unit 122 exceeds a predetermined threshold, the determination unit 124 determines that some of the plurality of terminals have moved in the same moving object. For example, when the number "20" of times calculated by the calculation unit 122 exceeds a predetermined threshold "15", the determination unit 124 determines that some of the plurality of terminals have moved in the same moving object.

Furthermore, for example, when the number "10" of times calculated by the calculation unit 122 does not exceed the predetermined threshold "15", the determination unit 124 determines that some of the plurality of terminals have moved in different moving objects.

### [3. Outline of Processing]

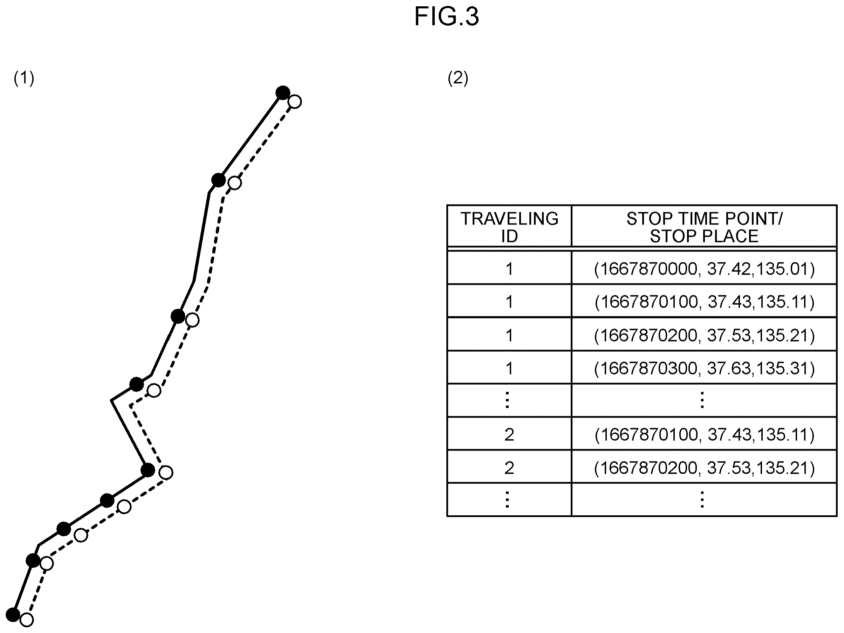

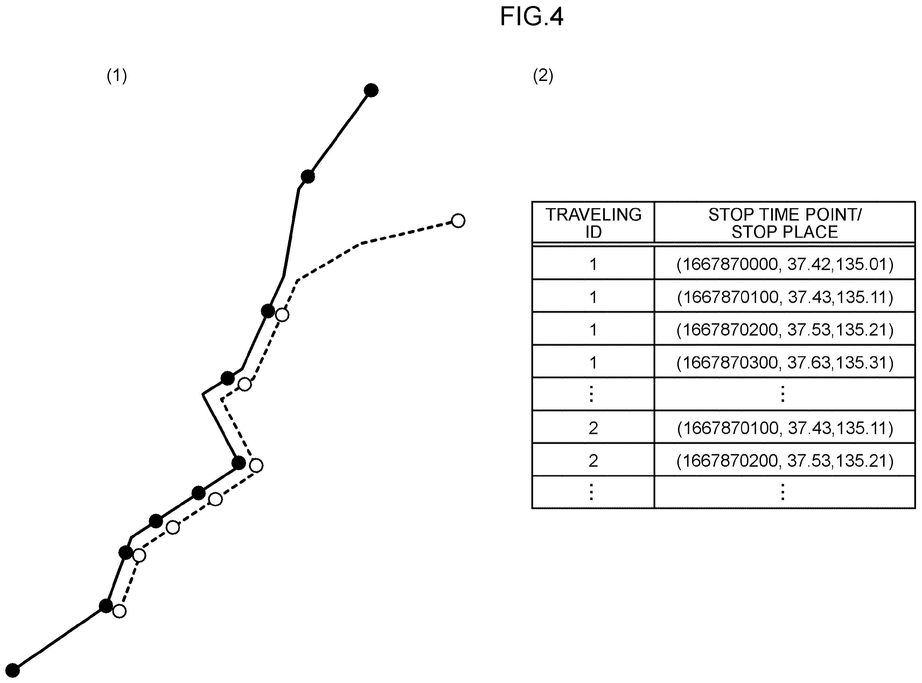

Next, processing performed by the information processing device 100 will be outlined with reference to FIGS. 3 and 4. FIGS. 3 and 4 outline the processing performed by the information processing device 100 according to the embodiment. Here, line portions in FIGS. 3(1) and 4(1) indicate traveling routes, and circle portions indicate stops. Furthermore, FIGS. 3(2) and 4(2) illustrate display examples of information on a traveling track stored in the storage unit 130.

First, the acquisition unit 121 acquires information on a stop time point, a stop place, and a traveling ID included in the information on a traveling track. In an example of FIG. 3, the acquisition unit 121 acquires information (FIG. 3(2)) on a stop time point, a stop place, and a traveling ID included in the information on a traveling track (FIG. 3(1)).

Next, the calculation unit 122 calculates the number of times information on a stop time point and a stop place included in the information on a traveling track of a traveling ID "1" acquired by the acquisition unit 121 matches information on a stop time point and a stop place included in the information on a traveling track of a traveling ID "2".

Here, the match includes not only exact match but partial match. That is, even when a plurality of tracks only partially matches each other spatially and temporally, the plurality of tracks may be determined as matching each other. For example, also when stop time points/stop places of a certain traveling track and another traveling track partially match each other, the traveling tracks may be determined as matching each other.

Here, whether the stop time points match each other and whether the stop places match each other may be determined within a certain degree of range. For example, when the difference between the stop time points falls within a predetermined range, the stop time points may be determined as matching each other. Specifically, when the difference between the stop time points falls within five seconds, the stop time points may be determined as matching each other.

Furthermore, for example, when the difference between the stop places falls within a predetermined range, the stop places may be determined as matching each other. Specifically, when the difference between the stop places falls within 2.5 m, the stop places may be determined as matching each other.

Furthermore, for example, when a map is divided into predetermined units of meshes and the stop places are included in the same mesh, the stop places may be determined as matching each other. Specifically, when a map is divided into meshes in units of 2.5 m and the stop places are included in the same mesh, the stop places may be determined as matching each other. Note that any period, distance, coordinate, and the like for a purpose can be used as the predetermined range and the predetermined unit as described above.

That is, when the information on a traveling track partially overlaps the information on another traveling track as illustrated in FIG. 4(1), the calculation unit 122 the calculation unit 122 calculates the number of times the information on a stop time point and a stop place included in the information on the certain traveling track and the information on a stop time point and a stop place included in the information on the other traveling track, which have been acquired by the acquisition unit 121, match each other as illustrated in FIG. 4(2).

In an example of FIG. 4, although the start point and the end point of the traveling ID "1" do not match the start point and the end point of the traveling ID "2", intermediate routes overlap each other. Information on a stop time point and a stop place included in the information on a traveling track of the traveling ID "1" and information on a stop time point and a stop place included in the information on a traveling ID "2", which have been acquired by the acquisition unit 121, are calculated as matching each other seven times.

For example, also when routes partially overlap each other, whether stop time points match each other and whether stop places match each other can thus be determined. That is, even when a person leaves/joins a certain vehicle in a route, for example, when the person on the vehicle transfers to another vehicle on the way or when the vehicle picks up the person on the way, whether or not there has been a fellow passenger can be determined by performing match determination.

Subsequently, the threshold setting unit 123 sets a threshold based on the information on a traveling track. For example, the threshold setting unit 123 sets a threshold such that a longer traveling distance increases the threshold in the information on a traveling track acquired by the acquisition unit 121. The threshold setting unit 123 may set two thresholds depending on whether the traveling distance is a predetermined value or more, or may set a plurality of thresholds in stages in accordance with the traveling distance.

Furthermore, for example, the threshold setting unit 123 can set a threshold in accordance with the length of a stop time period in the information on a traveling track acquired by the acquisition unit 121. For example, the threshold setting unit 123 sets a threshold such that a longer stop time period increases the threshold in the information on a traveling track acquired by the acquisition unit 121.

Furthermore, for example, the threshold setting unit 123 can set a threshold in accordance with the number of times of stops in the information on a traveling track acquired by the acquisition unit 121. For example, the threshold setting unit 123 sets a threshold such that the larger number of times of stops increases the threshold in the information on a traveling track acquired by the acquisition unit 121.

Note that, when routes partially overlap each other, the threshold setting unit 123 may set a threshold as in the above-described example by using information such as a traveling distance, the length of a stop time period, and the number of times of stops in the overlapping routes. For example, the threshold setting unit 123 sets a threshold such that a longer traveling distance of the overlapping routes increases the threshold in the information on a traveling track acquired by the acquisition unit 121.

Furthermore, for example, the threshold setting unit 123 sets a threshold such that a longer stop time period in the overlapping routes increases the threshold in the information on a traveling track acquired by the acquisition unit 121. Furthermore, for example, the threshold setting unit 123 sets a threshold such that the larger number of times of stops in the overlapping routes increases the threshold in the information on a traveling track acquired by the acquisition unit 121.

Here, the threshold setting unit 123 may set a threshold by using a DB that stores relations between a value of each piece of information included in the information on a traveling track and the threshold. Furthermore, the threshold setting unit 123 may set, as a threshold, a predetermined rate or proportion in addition to a predetermined value. For example, the threshold setting unit 123 sets, as a threshold, a value obtained by multiplying the number of times of stops acquired by the acquisition unit 121 by 0.8.

Then, when the number of times calculated by the calculation unit 122 exceeds a predetermined threshold, the determination unit 124 determines that a terminal in which the information on a traveling track of the traveling ID "1" is recorded and a terminal in which the information on a traveling track of the traveling ID "2" is recorded have moved in the same moving object.

In the example of FIG. 3 in which the stop time points mostly match each other and the stop places mostly match each other, the number of times calculated by the calculation unit 122 exceeds a predetermined threshold. The determination unit 124 thus determines that a terminal in which the information on a traveling track of the traveling ID "1" is recorded and a terminal in which the information on a traveling track of the traveling ID "2" is recorded have moved in the same moving object.

In contrast, although the start points and the end points of the traveling tracks do not match each other, the number of times calculated by the calculation unit 122 exceeds a predetermined threshold in the example of FIG. 4 in which the stop time points mostly overlap each other and the stop places mostly overlap each other. The determination unit 124 thus determines that a terminal in which the information on a traveling track of the traveling ID "1" is recorded and a terminal in which the information on a traveling track of the traveling ID "2" is recorded have moved in the same moving object.

Note that the determination unit 124 can perform the determination processing at any piece of timing. For example, the determination unit 124 performs the determination processing at the time of registering information on a new traveling track.

### [4. Flowchart]

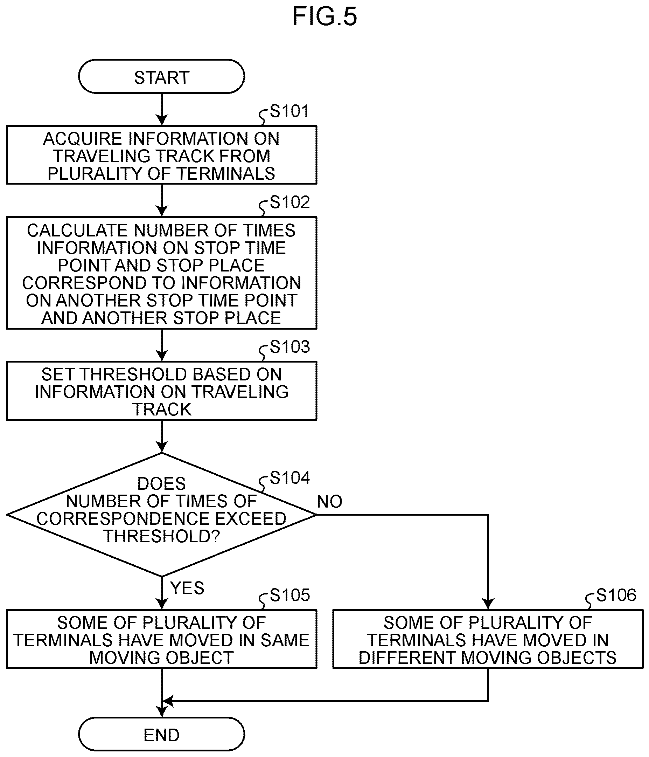

Next, the processing performed by the information processing device 100 having the above-described configuration will be described with reference to a flowchart of FIG. 5. The control unit 120 mainly executes the flowchart of FIG. 5. Furthermore, the flowchart can be used as an information processing program by being configured as a program to be executed by a CPU of the control unit 120. Note that Steps S101 to S106 below can be executed in a different order. Furthermore, some pieces of processing of Steps S101 to S106 below may be omitted.

First, the acquisition unit 121 acquires information on a traveling track from a plurality of terminals (Step S101).

Next, the calculation unit 122 calculates the number of times information on a stop time point and a stop place included in the information on a traveling track acquired by the acquisition unit 121 corresponds to information on a stop time point and a stop place included in the information on another traveling track (Step S102).

Subsequently, the threshold setting unit 123 sets a threshold for the number of times calculated by the calculation unit 122 based on the information on a traveling track acquired by the acquisition unit 121 (Step S103).

Subsequently, the determination unit 124 determines whether the number of times calculated by the calculation unit 122 exceeds a threshold (Step S104). In the case, when the determination unit 124 determines that the number of times calculated by the calculation unit 122 exceeds a threshold (Step S104 "YES"), the determination unit 124 determines that some of the plurality of terminals have moved in the same moving object (Step S105).

In contrast, when the determination unit 124 determines that the number of times calculated by the calculation unit 122 does not exceed a threshold (Step S104 "NO"), the determination unit 125 determines that some of the plurality of terminals have moved in different moving objects (Step S106).

### [5. Effects]

The information processing device 100 according to the embodiment includes: the acquisition unit 121 that acquires information on a traveling track from a plurality of terminals; and the determination unit 124 that determines that some of the plurality of terminals have moved in the same moving object based on the correspondence between information on a stop time point and a stop place included in information on a traveling track acquired by the acquisition unit 121 and information on a stop time point and a stop place included in information on another traveling track.

This enables the information processing device 100 to easily determine whether terminals have been in the same moving object by using the correspondence between a stop time point and a stop place included in information on a certain traveling track and a stop time point and a stop place included in information on another traveling track.

The information processing device 100 according to the embodiment further includes the calculation unit 122 that calculates the number of times information on a stop time point and a stop place included in information on a traveling track acquired by the acquisition unit 121 corresponds to information on a stop time point and a stop place included in information on another traveling track. When the number of times calculated by the calculation unit 122 exceeds a predetermined threshold, the determination unit 124 determines that some of a plurality of terminals have moved in the same moving object.

This enables the information processing device 100 to easily determine whether terminals have been in the same moving object by determining whether the number of times a stop time point and a stop place included in information on a certain traveling track and a stop time point and a stop place included in information on another traveling track correspond to each other exceeds a threshold.

The information processing device 100 according to the embodiment further includes the threshold setting unit 123 that sets a threshold for the number of times calculated by the calculation unit 122 based on the information on a traveling track acquired by the acquisition unit 121.

This enables the information processing device 100 to easily determine whether terminals have been in the same moving object by determining whether the number of times a stop time point and a stop place included in information on a certain traveling track and a stop time point and a stop place included in information on another traveling track correspond to each other exceeds a threshold.

The threshold setting unit 123 of the information processing device 100 according to the embodiment sets a threshold in accordance with the length of a traveling distance in the information on a traveling track acquired by the acquisition unit 121.

This enables the information processing device 100 to easily determine whether terminals have been in the same moving object by determining whether the number of times a stop time point and a stop place included in information on a certain traveling track and a stop time point and a stop place included in information on another traveling track correspond to each other exceeds a threshold in accordance with the length of the traveling distance.

The threshold setting unit 123 of the information processing device 100 according to the embodiment sets a threshold in accordance with the length of a stop time period in the information on a traveling track acquired by the acquisition unit 121.

This enables the information processing device 100 to easily determine whether terminals have been in the same moving object by determining whether the number of times a stop time point and a stop place included in information on a certain traveling track and a stop time point and a stop place included in information on another traveling track correspond to each other exceeds a threshold in accordance with the length of the stop time period.

The threshold setting unit 123 of the information processing device 100 according to the embodiment sets a threshold in accordance with the number of times of stops in the information on a traveling track acquired by the acquisition unit 121.

This enables the information processing device 100 to easily determine whether terminals have been in the same moving object by determining whether the number of times a stop time point and a stop place included in information on a certain traveling track and a stop time point and a stop place included in information on another traveling track correspond to each other exceeds a threshold in accordance with the number of times of stops.

The acquisition unit 121 of the information processing device 100 according to the embodiment acquires, as a stop time point, an elapsed time from a stop in the information on a traveling track.

This enables the information processing device 100 to easily determine whether terminals have been in the same moving object by using the correspondence between a stop time point (elapsed time from stop) and a stop place included in information on a certain traveling track and a stop time point (elapsed time from stop) and a stop place included in information on another traveling track. Furthermore, even when terminals set different system time points, match determination can be performed by using an elapsed time from the previous stop place.

### [6. Hardware Configuration]

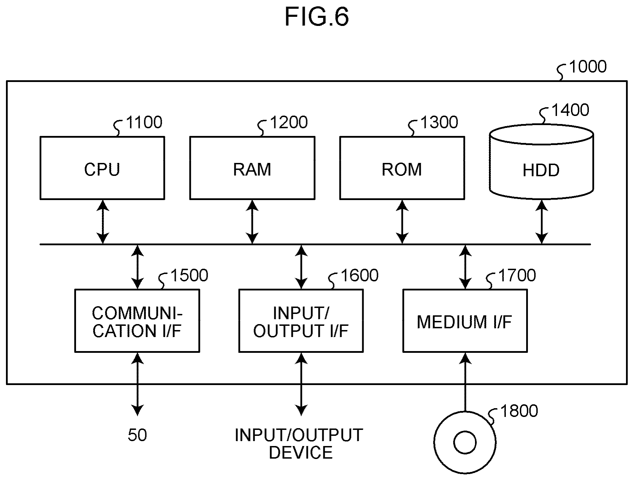

Furthermore, the information processing device 100 according to the embodiment as described above is implemented by a computer 1000 having a configuration as illustrated in FIG. 6, for example. FIG. 6 is a hardware configuration diagram illustrating an example of a computer that implements the functions of the information processing device 100. The computer 1000 includes a CPU 1100, a RAM 1200, a ROM 1300, an HDD 1400, a communication interface (I/F) 1500, an input/output interface (I/F) 1600, and a medium interface (I/F) 1700.

The CPU 1100 operates based on a program stored in the ROM 1300 or the HDD 1400, and controls each unit. The ROM 1300 stores a boot program to be executed by the CPU 1100 when the computer 1000 is activated, a program depending on hardware of the computer 1000, and the like.

The HDD 1400 stores a program to be executed by the CPU 1100, data to be used by the program, and the like. The communication interface 1500 receives data from another device via a predetermined communication network, sends the data to the CPU 1100, and transmits data generated by the CPU 1100 to another device via the predetermined communication network.

The CPU 1100 controls an output device such as a display and a printer and an input device such as a keyboard and a mouse via the input/output interface 1600. The CPU 1100 acquires data from the input device via the input/output interface 1600. Furthermore, the CPU 1100 outputs the generated data to the output device via the input/output interface 1600.

The medium interface 1700 reads a program or data stored in a recording medium 1800, and provides the program or data to the CPU 1100 via the RAM 1200. The CPU 1100 loads the program from the recording medium 1800 onto the RAM 1200 via the medium interface 1700, and executes the loaded program. Examples of the recording medium 1800 include an optical recording medium such as a digital versatile disc (DVD) and a phase change rewritable disk (PD), a magneto-optical recording medium such as a magneto-optical disk (MO), a tape medium, a magnetic recording medium, and a semiconductor memory.

For example, when the computer 1000 functions as the information processing device 100 according to the embodiment, the CPU 1100 of the computer 1000 implements the functions of the control unit 120 by executing a program loaded onto the RAM 1200. The CPU 1100 of the computer 1000 reads and executes programs from the recording medium 1800. In another example, the CPU 1100 of the computer 1000 may acquire these programs from another device via a predetermined communication network.

### [7. Others]

Although an example of the embodiment according to the present invention has been described above, the present invention is not limited to the above-described example. That is, those skilled in the art can make various modifications without departing from the gist of the present invention in accordance with conventional knowledge. Of course, those including the information processing device of the present invention regardless of such modifications are included in the scope of the present invention.

### Reference Signs List

- 1: INFORMATION PROCESSING SYSTEM

- 10: IN-VEHICLE DEVICE
- 100: INFORMATION PROCESSING DEVICE
- 110: COMMUNICATION UNIT
- 120: CONTROL UNIT
- 121: ACQUISITION UNIT
- 122: CALCULATION UNIT
- 123: THRESHOLD SETTING UNIT
- 124: DETERMINATION UNIT
- 130: STORAGE UNIT

## Claims

1. An information processing device comprising:
an acquisition unit that acquires information on a traveling track from a plurality of terminals; and
a determination unit that determines that some of the plurality of terminals have moved in a same moving object based on correspondence between information on a stop time point and a stop place included in information on a traveling track acquired by the acquisition unit and information on a stop time point and a stop place included in information on another traveling track.

2. The information processing device according to claim 1, further comprising
a calculation unit that calculates a number of times information on a stop time point and a stop place included in the information on a traveling track acquired by the acquisition unit corresponds to information on a stop time point and a stop place included in the information on another traveling track,
wherein, when the number of times calculated by the calculation unit exceeds a predetermined threshold, the determination unit determines that some of the plurality of terminals have moved in a same moving object.

3. The information processing device according to claim 2, further comprising
a threshold setting unit that sets a threshold for the number of times calculated by the calculation unit based on the information on a traveling track acquired by the acquisition unit.

4. The information processing device according to claim 3, wherein the threshold setting unit sets a threshold in accordance with a length of a traveling distance in the information on a traveling track acquired by the acquisition unit.

5. The information processing device according to claim 3, wherein the threshold setting unit sets a threshold in accordance with a length of a stop time period in the information on a traveling track acquired by the acquisition unit.

6. The information processing device according to claim 3, wherein the threshold setting unit sets a threshold in accordance with a number of times of stops in the information on a traveling track acquired by the acquisition unit.

7. The information processing device according to claim 1, wherein the acquisition unit acquires, as a stop time point, an elapsed time from a stop in the information on a traveling track.

8. An information processing method to be executed by a computer, comprising:
an acquisition process of acquiring information on a traveling track from a plurality of terminals; and
a determination process of determining that some of the plurality of terminals have moved in a same moving object based on correspondence between information on a stop time point and a stop place included in information on a traveling track acquired in the acquisition process and information on a stop time point and a stop place included in information on another traveling track.

9. An information processing program causing a computer to execute:
an acquisition step of acquiring information on a traveling track from a plurality of terminals; and
a determination step of determining that some of the plurality of terminals have moved in a same moving object based on correspondence between information on a stop time point and a stop place included in information on a traveling track acquired in the acquisition step and information on a stop time point and a stop place included in information on another traveling track.
